# EUROPEAN PATENT APPLICATION

(11) **EP 4 485 789 A1**
(43) Date of publication of application: **01.01.2025**
(21) Application number: 22928508.5
(22) Date of filing: 22.02.2022
(51) Int. Cl.: H02N 1/00

(54) **ELECTRONIC COMPONENT, OPTICAL DIRECTIONAL COUPLER AND METHOD FOR CONTROLLING OPTICAL DIRECTIONAL COUPLER**

(71) Applicant: FUJITSU LIMITED, Kawasaki-shi, Kanagawa 211-8588 (JP)
(72) Inventor: IWAI, Toshiki, Kawasaki-shi, Kanagawa 211-8588 (JP); DOI, Yoshiyasu, Kawasaki-shi, Kanagawa 211-8588 (JP); KAWAGUCHI, Kenichi, Kawasaki-shi, Kanagawa 211-8588 (JP); ISHIGURO, Tetsuro, Kawasaki-shi, Kanagawa 211-8588 (JP); MIYATAKE, Tetsuya, Kawasaki-shi, Kanagawa 211-8588 (JP); SATO, Shintaro, Kawasaki-shi, Kanagawa 211-8588 (JP)
(74) Representative: Haseltine Lake Kempner LLP
(86) International application number: PCT/JP2022/007129
(87) International publication number: WO 2023/161977

(57) **Abstract**

An electronic component an optical directional coupler, and a method for controlling the optical directional coupler that are capable of accurately moving a movable waveguide are provided. An electronic component includes: a first insulating portion; a second insulating portion that faces the first insulating portion and is movable relative to the first insulating portion such that a distance from the first insulating portion changes; a first capacitor that includes a first electrode provided in the first insulating portion and a second electrode provided in the second insulating portion; a second capacitor that includes a third electrode provided in the first insulating portion and a fourth electrode provided in the second insulating portion; and an inductor coupled to the second capacitor to constitute a resonance circuit.

## Description

### FIELD

The present disclosure relates to an electronic component, an optical directional coupler, and a method for controlling the optical directional coupler.

### BACKGROUND

There is a traditional optomechanical device (optical directional coupler) based on mode coupling, in which two waveguides (a horizontal input waveguide and a vertical output waveguide) crossing each other and a movable coupler are arranged so as to intersect. The coupler is a curved movable waveguide that is switched between a coupled state in which the two waveguides are coupled and a decoupled state. An electrostatic actuator is used to move the movable waveguide (see, for example, Patent Document 1.).

### SUMMARY

### TECHNICAL PROBLEM

Meanwhile, in the optical directional coupler, when the movable waveguide is moved with respect to the two waveguides to switch between the coupled state and the decoupled state, very high positional accuracy is involved. However, since the traditional optical directional coupler is not particularly devised, it is difficult to accurately move the movable waveguide.

Thus, an object is to provide an electronic component, an optical directional coupler, and a method for controlling the optical directional coupler that are capable of accurately moving a movable waveguide.

### SOLUTION TO PROBLEM

An electronic component according to an embodiment of the present disclosure includes: a first insulating portion; a second insulating portion that faces the first insulating portion and is movable relative to the first insulating portion such that a distance from the first insulating portion changes; a first capacitor that includes a first electrode provided in the first insulating portion and a second electrode provided in the second insulating portion; a second capacitor that includes a third electrode provided in the first insulating portion and a fourth electrode provided in the second insulating portion; and an inductor coupled to the second capacitor to constitute a resonance circuit.

### ADVANTAGEOUS EFFECTS OF INVENTION

An electronic component an optical directional coupler, and a method for controlling the optical directional coupler that are capable of accurately moving a movable waveguide may be provided.

### BRIEF DESCRIPTION OF DRAWINGS

FIG. 1 is a diagram illustrating an example of a planar configuration of a quantum computer 1 according to an embodiment.
FIG. 2 is a diagram illustrating an example of a configuration of a beam splitter 30.
FIG. 3 is a diagram explaining an example of an operation of the quantum computer 1.
FIG. 4 is a plan view illustrating an example of a configuration of an optical directional coupler 100.
FIG. 5 is a diagram illustrating an example of a configuration of a first insulating portion 110, a second insulating portion 120, a spring 130, and a movable waveguide 150 of the optical directional coupler 100.
FIG. 6 (i.e., FIGs. 6A and 6B) is a diagram illustrating an example of configurations of a cross section taken along line A-A and a cross section taken along line B-B in FIG. 4.
FIG. 7 is a diagram explaining dimensions relating to a third electrode 115B and a fourth electrode 125B.
FIG. 8 is a diagram illustrating a state in which the optical directional coupler 100 is turned on.
FIG. 9 is a diagram illustrating a state in which the optical directional coupler 100 is turned off.
FIG. 10 is a diagram illustrating an example of an equivalent circuit 160 of the optical directional coupler 100.
FIG. 11 is a diagram illustrating an example of a drive control unit 180.
FIG. 12 is a plan view illustrating an example of a configuration of an optical directional coupler 100M1 of a first modification of the embodiment.
FIG. 13 is a plan view illustrating an example of a configuration of an optical directional coupler 100M2 of a second modification of the embodiment.
FIG. 14 is a plan view illustrating an example of a configuration of the optical directional coupler 100M2 of the second modification of the embodiment.
FIG. 15 is a plan view illustrating an example of a configuration of an optical directional coupler 100M3 of a third modification of the embodiment.

### DESCRIPTION OF EMBODIMENTS

Hereinafter, embodiments to which an electronic component, an optical directional coupler, and a method for controlling the optical directional coupler of the present disclosure are applied will be described.

### <Embodiments>

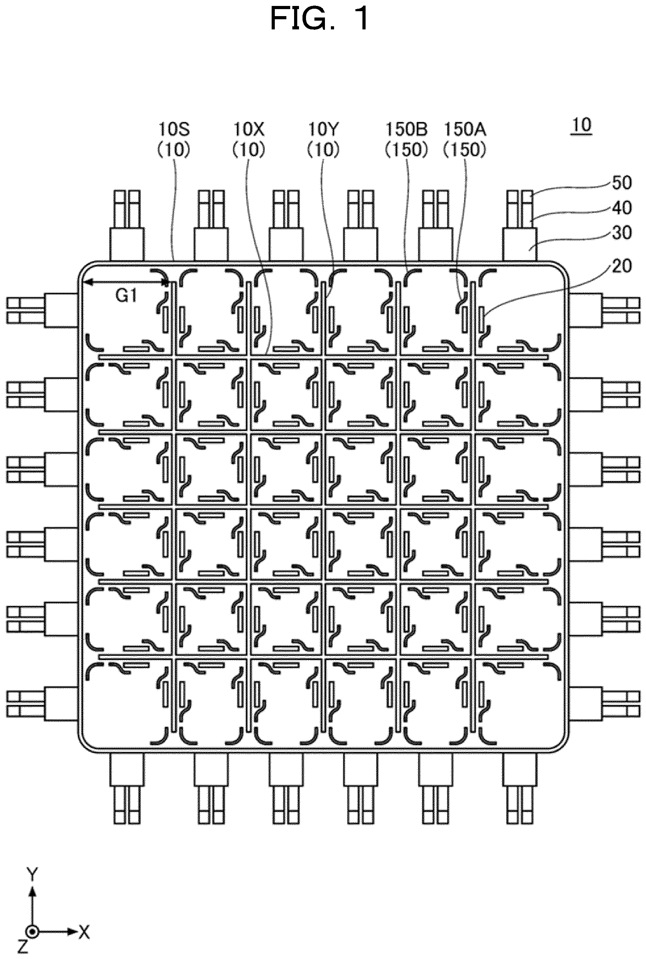

FIG. 1 is a diagram illustrating an example of a planar configuration of a quantum computer 1 according to an embodiment. Hereinafter, description will be given by defining an XYZ coordinate system. A direction parallel to an X axis (X direction), a direction parallel to a Y axis (Y direction), and a direction parallel to a Z axis (Z direction) are orthogonal to each other. In addition, a plan view means to view from an XY plane. In addition, in the following, a length, a width, a thickness, and the like of each part will be sometimes exaggeratedly illustrated so as to facilitate understanding of the configuration.

The quantum computer 1 includes a waveguide 10 (10X, 10Y, 10S), a movable waveguide 150 (150A, 150B), a qubit device 20, a beam splitter 30, a coupler 40, and a photodetector 50. Among them, the waveguide 10 (10X, 10Y, 10S) is manufactured by, for example, micromachining a silicon substrate or the like. In addition, the movable waveguide 150 (150A, 150B) is implemented by micro electro mechanical systems (MEMS), and details thereof will be described later. The qubit device 20 is implemented by a diamond qubit using a diamond color center. The quantum computer 1 is a diamond qubit quantum computer.

The waveguide 10 includes waveguides 10X, 10Y, and 10S. The waveguides 10X, 10Y, and 10S are waveguides through which light is allowed to propagate. A plurality of waveguides 10X is provided extending in the X direction, respectively. A plurality of waveguides 10Y is provided extending in the Y direction, respectively. The waveguides 10X and 10Y intersect. Note that an interval G1 between the waveguide 10X located at an end on a -X direction side and the waveguide 10S is about 500 µm, as an example, which likewise applies also to an interval between the adjacent waveguides 10X and an interval between the adjacent waveguides 10Y.

The waveguide 10S is provided in a substantially rectangular ring shape so as to surround the peripheries of the waveguides 10X and 10Y. The four corners of the waveguide 10S are curved in a rounded shape in plan view. This is to allow light to propagate inside. Two ends of the waveguides 10X and 10Y are not directly coupled to the waveguide 10S, and an optical path through which light is allowed to propagate is formed by the movable waveguide 150. Note that the waveguides 10X, 10Y, and 10S will be simply referred to as waveguides 10 unless otherwise distinguished.

The movable waveguides 150A are provided between the waveguide 10X and the qubit devices 20 and between the waveguide 10Y and the qubit devices 20. The movable waveguide 150A is moved by an optical directional coupler to be described later, thereby being switched to one of: a coupled state in which an end portion of the waveguide 10X or 10Y and the waveguide 10S are coupled, and a decoupled state in which an end portion of the waveguide 10X or 10Y and the waveguide 10S are not coupled. Hereinafter, being switchable between the coupled state and the decoupled state will be referred to as couplable and separable.

The movable waveguides 150B are provided between each end of the waveguide 10X and the waveguide 10S and between each end of the waveguide 10Y and the waveguide 10S. The movable waveguide 150B is moved by the optical directional coupler to be described later, thereby being switched to one of: a coupled state in which the waveguides 10X and 10Y and the qubit device 20 are coupled, and a decoupled state in which the waveguides 10X and 10Y and the qubit device 20 are not coupled.

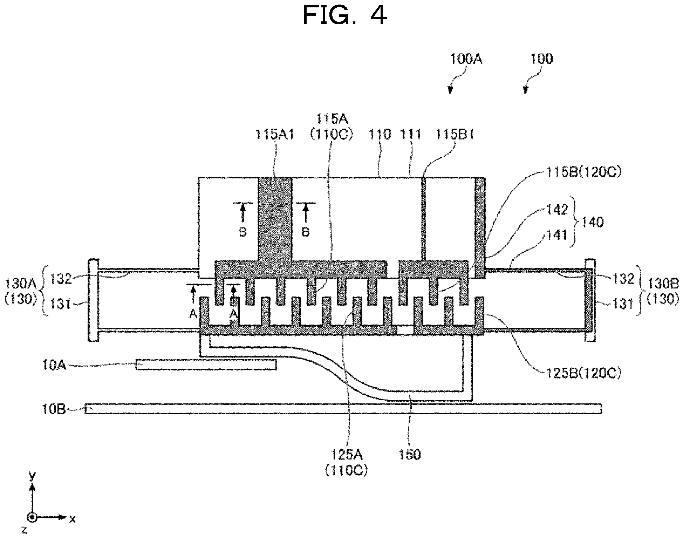

The movable waveguides 150A and 150B have similar configurations. Hereinafter, the movable waveguides 150A and 150B will be simply referred to as movable waveguides 150 unless otherwise distinguished. Details of the movable waveguide 150 will be described later with reference to FIG. 4 and other drawings.

The qubit devices 20 are provided along the waveguides 10X and 10Y. The qubit device 20 is implemented by a diamond qubit using a diamond color center and holds a qubit. The qubit is based on three elements such as an electron spin, a nuclear spin, and a photon, or is based on elements such as an electron spin and a photon.

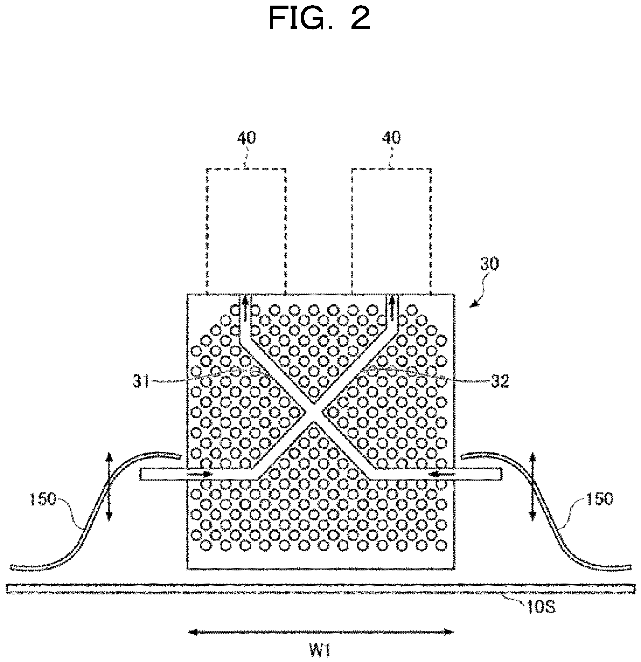

The beam splitter 30 is coupled around the waveguide 10S. The beam splitter 30 will be described with reference to FIG. 2 along with FIG. 1. FIG. 2 is a diagram illustrating an example of a configuration of the beam splitter 30. The beam splitter 30 includes two waveguides 31 and 32 arranged in an X-shape in plan view, and one coupler 40 is coupled to one end of each of the waveguides 31 and 32. In addition, the movable waveguides 150 are provided at another end of each of the waveguides 31 and 32 so as to be couplable and separable. When one of the two movable waveguides 150 is brought into the coupled state, coupling to the waveguide 10S is obtained. Note that a width W1 of the beam splitter 30 is about 50 µm.

The coupler 40 is an optical coupler that couples between the beam splitter 30 and the photodetector 50. The photodetector 50 detects light input via the coupler 40. As the photodetector 50, for example, an avalanche photodiode (APD), a superconducting nanowire photon detector (SNSPD), or the like can be used. Note that, in a case where photons are directly detected from the waveguide 10S, the coupler 40 may not be provided.

### <Operation of Quantum Computer 1>

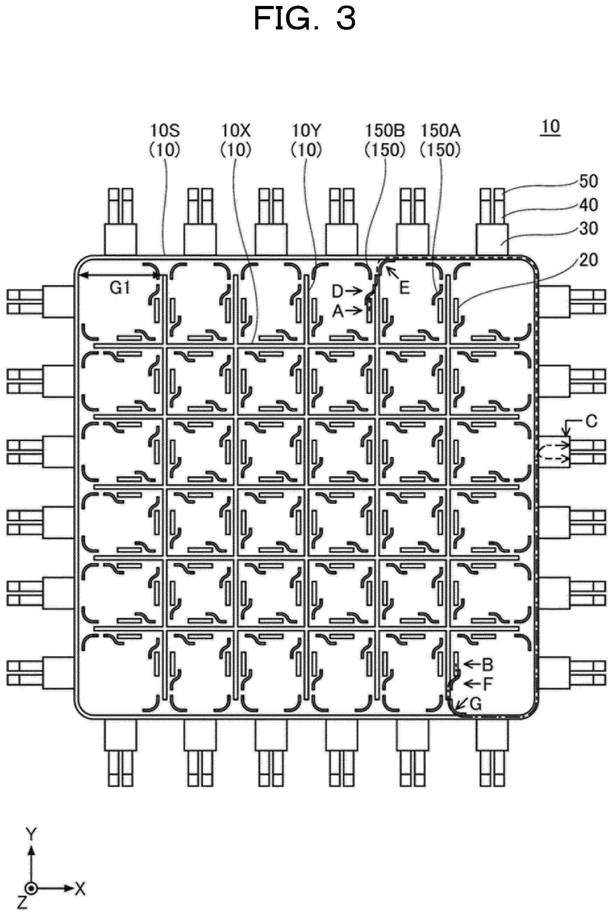

FIG. 3 is a diagram explaining an example of an operation of the quantum computer 1. Here, entanglement will be described. Entanglement is to bring qubits into an unrecognizable state each other when performing quantum computation.

Two qubit devices 20 (the two qubit devices 20 indicated by the arrows A and B) corresponding to two qubits desired to be entangled are selected, and one beam splitter 30 (the beam splitter 30 indicated by the arrow C) for entangling the two qubits is selected. The path leading to the beam splitter 30 indicated by the arrow C from the qubit device 20 indicated by the arrow A is the path indicated by the dashed line. The path leading to the beam splitter 30 indicated by the arrow C from the qubit device 20 indicated by the arrow B is the path indicated by the dashed-dotted line. When the movable waveguides 150 (the movable waveguides 150 indicated by the arrows D and E) included in the path indicated by the dashed line and the movable waveguide 150 (the movable waveguide 150 indicated by the arrow F) in the path indicated by the dashed-dotted line are brought into the coupled state, the qubits of the two qubit devices 20 indicated by the arrows A and B are input to the beam splitter 30 indicated by the arrow C and entangled. When the movable waveguides 150 indicated by the arrows D and E and the movable waveguide 150 indicated by the arrow F are in the decoupled state, the qubits are not output to the movable waveguide 150 from the two qubit devices 20 indicated by the arrows A and B and thus are not entangled.

### <Optical Directional Coupler 100>

FIG. 4 is a plan view illustrating an example of a configuration of an optical directional coupler 100. The optical directional coupler 100 includes a first insulating portion 110, a second insulating portion 120, a first electrode 115A, a second electrode 125A, a third electrode 115B, a fourth electrode 125B, a first capacitor 110C, a second capacitor 120C, a spring (elastic member) 130, a metal film 140, and the movable waveguide 150. The first capacitor 110C includes the first electrode 115A and the second electrode 125A. The second capacitor 120C includes the third electrode 115B and the fourth electrode 125B. Besides them, the optical directional coupler 100 includes a drive control unit that performs drive control of the movable waveguide 150, and the drive control unit will be described later with reference to the drawings.

An electronic component 100A of the embodiment is obtained by excluding the movable waveguide 150 from the optical directional coupler 100. Specifically, the electronic component 100A includes the first insulating portion 110, the second insulating portion 120, the first electrode 115A, the second electrode 125A, the third electrode 115B, the fourth electrode 125B, the first capacitor 110C, the second capacitor 120C, the spring 130, and the metal film 140. The optical directional coupler 100 and the electronic component 100A are implemented by MEMS.

As an example, the first insulating portion 110, the second insulating portion 120, the spring 130, and the movable waveguide 150 are integrally manufactured by subjecting an insulator such as silicon (Si), alumina (Al₂O₃), or silicon carbide (SiC) to micromachining for manufacturing MEMS.

FIG. 4 illustrates waveguides 10A and 10B along with the optical directional coupler 100. The waveguide 10A is an example of a first waveguide, and the waveguide 10B is an example of a second waveguide. The optical directional coupler 100 is an optical switch having the movable waveguide 150 as a movable unit and is switched between a coupled state in which the waveguides 10A and 10B are coupled and a decoupled state in which the waveguides 10A and 10B are not coupled.

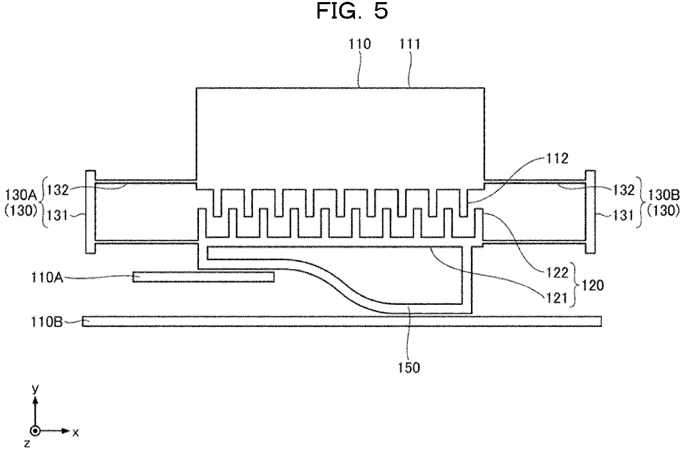

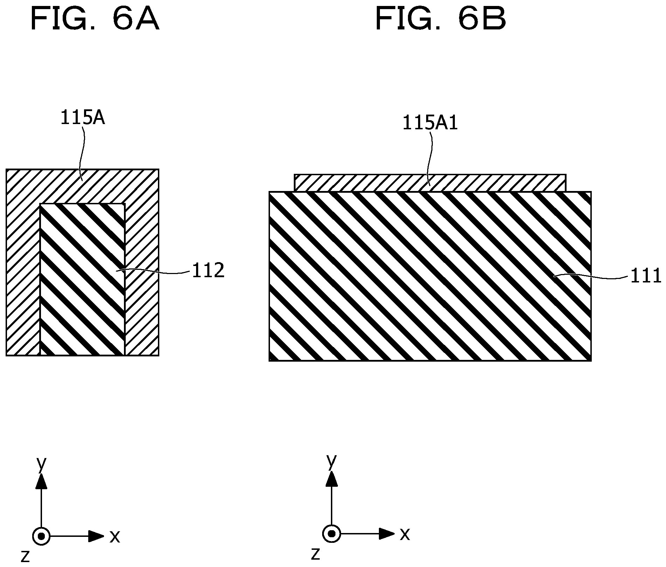

Here, the optical directional coupler 100 will be described with reference to FIGs. 5 and 6 along with FIG. 4. FIG. 5 is a diagram illustrating an example of a configuration of the first insulating portion 110, the second insulating portion 120, the spring 130, and the movable waveguide 150 of the optical directional coupler 100. FIG. 6 (i.e., FIGs. 6A and 6B) is a diagram illustrating an example of configurations of a cross section taken along line A-A and a cross section taken along line B-B in FIG. 4. In FIGs. 4 to 6, description will be given by defining an xyz coordinate system indicated by lower case letters. A direction parallel to an x axis (x direction), a direction parallel to a y axis (y direction), and a direction parallel to a z axis (z direction) are orthogonal to each other. In addition, a plan view means to view from an xy plane.

As illustrated in FIG. 5, the first insulating portion 110 includes a plate-shaped base portion 111 and a plurality of protrusions 112 protruding in a -y direction from a surface of the base portion 111 on a -y direction side. The thickness of the base portion 111 in the z direction is unchanged over the entire base portion 111. The plurality of protrusions 112 protrudes from the base portion 111 in a comb-teeth shape and are an example of a first comb-teeth portion.

The thickness of the plurality of protrusions 112 in the z direction is equal to the thickness of the base portion 111 in the z direction, and the position of the plurality of protrusions 112 in the z direction is equal to the position of the base portion 111 in the z direction. In the z direction, the plurality of protrusions 112 extends at a position between a surface of the base portion 111 on a +z direction side and a surface of the base portion 111 on a -z direction side.

Leaf spring portions 132 of the spring 130 are coupled to side surfaces of the base portion 111 on a ±x direction side. As an example, the first insulating portion 110 is fixedly provided by being fixed to a substrate (not illustrated).

As illustrated in FIG. 5, the second insulating portion 120 faces the first insulating portion 110 and is provided movable with respect to the first insulating portion 110 such that a distance from the first insulating portion 110 changes. As illustrated in FIG. 5, the second insulating portion 120 includes a plate-shaped base portion 121 and a plurality of protrusions 122 protruding in a +y direction from a surface of the base portion 121 on a +y direction side. In addition, the movable waveguide 150 is attached to a -y direction side of the base portion 121 of the second insulating portion 120. Therefore, the second insulating portion 120 moves in the y direction with respect to the first insulating portion 110 together with the movable waveguide 150.

The thickness of the base portion 121 in the z direction is unchanged over the entire base portion 121. The thickness of the base portion 121 in the z direction is equal to the thickness of the base portion 111 of the first insulating portion 110 in the z direction, as an example, and the position of the base portion 121 in the z direction is equal to the position of the base portion 111 in the z direction.

The plurality of protrusions 122 protrudes from the base portion 121 in a comb-teeth shape and are an example of a second comb-teeth portion. The leaf spring portions 132 of the spring 130 are coupled to side surfaces of the base portion 121 on the ±x direction side.

The thickness of the plurality of protrusions 122 in the z direction is equal to the thickness of the base portion 121 in the z direction, and the position of the plurality of protrusions 122 in the z direction is equal to the position of the base portion 121 in the z direction. In the z direction, the plurality of protrusions 122 extends at a position between a surface of the base portion 121 on the +z direction side and a surface of the base portion 121 on the -z direction side.

The plurality of protrusions 122 faces the plurality of protrusions 112 of the first insulating portion 110 in the y direction, and the position of each protrusion 122 in the x direction is shifted with respect to the position of each protrusion 112 in the x direction. The width in the x direction and the length in the y direction of the plurality of protrusions 122 are equal to the width in the x direction and the length in the y direction of the plurality of protrusions 112. When the second insulating portion 120 moves in the +y direction with respect to the first insulating portion 110, the plurality of protrusions 122 are accommodated between the plurality of protrusions 112 in a nested style. At this time, the plurality of protrusions 112 and the plurality of protrusions 122 do not come into contact with each other. In this manner, the plurality of protrusions 122 is arranged to face the plurality of protrusions 112 in a nested manner. When the second insulating portion 120 moves in the +y direction with respect to the first insulating portion 110, the distance between the first insulating portion 110 and the second insulating portion 120 is shortened.

Note that, here, a mode in which the first insulating portion 110 is fixed and the second insulating portion 120 is provided movable with respect to the first insulating portion 110 will be described, but both of the first insulating portion 110 and the second insulating portion 120 may be movable so as to approach each other in the y direction. It is sufficient that the second insulating portion 120 faces the first insulating portion 110 and is provided movable relative to the first insulating portion 110 such that a distance from the first insulating portion 110 changes.

As illustrated in FIGs. 4 and 6A, the first electrode 115A is provided on a surface of the protrusion 112 (see FIGs. 5 and 6) on the +z direction side, a side surface of the protrusion 112 on the +x direction side, and a side surface of the protrusion 112 on the -x direction side. The first electrode 115A is further formed on a side surface of the protrusion 112 on the -y direction side, a side surface of the base portion 111 on the -y direction side (a side surface parallel to an xz plane between one protrusion 112 and another protrusion 112), and a portion of the base portion 111 along an end side on the -y direction side of a surface on the +z direction side.

The first electrode 115A is formed on the remaining protrusions 112 excluding a part of the protrusions 112 on the +x direction side among the plurality of protrusions 112 (see FIG. 5). In FIG. 4, as an example, the first electrode 115A is formed on outer surfaces of the six protrusions 112 on the -x direction side among the nine protrusions 112. In addition, the first electrode 115A may be further formed on a surface of the protrusion 112 on the -z direction side. As an example, such a first electrode 115A can be manufactured by forming wire lines made of a transparent conductor (indium tin oxide or the like) on the surfaces of the base portion 111 and the protrusions 112, using a lift-off process.

In addition, a terminal 115A1 is coupled to the first electrode 115A. As illustrated in FIG. 6B, the terminal 115A1 is provided on the surface of the base portion 111 on the +z direction side. The terminal 115A1 extends from an end portion of the first electrode 115A on the +y direction side to an end portion of the base portion 111 on the +y direction side.

A voltage is applied to the first electrode 115A from the drive control unit. When the ground potential is set in the first electrode 115A and a negative voltage is applied to a terminal 142, the second electrode 125A and the movable waveguide 150 move.

Similarly to the first electrode 115A, the second electrode 125A (see FIG. 4) is provided on a surface of the protrusion 122 (see FIG. 5) on the +z direction side, a side surface of the protrusion 122 on the +x direction side, a side surface of the protrusion 122 on the -x direction side, and a side surface of the protrusion 122 on the +y direction side. The second electrode 125A is further formed on a side surface of the base portion 121 on the +y direction side (a side surface parallel to the xz plane between one protrusion 122 and another protrusion 122), and a surface of the base portion 121 on the +z direction side. The second electrode 125A is held at the ground potential (0 V).

The second electrode 125A is formed on outer surfaces of the remaining protrusions 122 excluding a part of the protrusions 122 on the +x direction side among the plurality of protrusions 122 (see FIG. 5). In FIG. 4, as an example, the second electrode 125A is formed on outer surfaces of the seven protrusions 122 on the -x direction side among the ten protrusions 122. In addition, the second electrode 125A may be further formed on a surface of the protrusion 122 on the -z direction side. As an example, such a second electrode 125A can be manufactured by forming wire lines made of a transparent conductor (indium tin oxide or the like) on the surfaces of the base portion 121 and the protrusions 122, using a lift-off process.

Similarly to the first electrode 115A, the third electrode 115B is provided on a surface of the protrusion 112 on the +z direction side, a side surface of the protrusion 112 on the +x direction side, and a side surface of the protrusion 112 on the -x direction side. The third electrode 115B is further formed on a side surface of the protrusion 112 on the -y direction side, a side surface of the base portion 111 on the -y direction side (a side surface parallel to the xz plane between one protrusion 112 and another protrusion 112), and a portion of the base portion 111 along an end side on the -y direction side of a surface on the +z direction side.

The third electrode 115B is formed on the remaining protrusions 112 excluding the protrusions 112 on which the first electrode 115A is formed, among the plurality of protrusions 112 (see FIG. 5). In FIG. 4, as an example, the third electrode 115B is formed on outer surfaces of the three protrusions 112 on the +x direction side among the nine protrusions 112. In addition, the third electrode 115B may be further formed on a surface of the protrusion 112 on the -z direction side. As an example, such a third electrode 115B can be manufactured by forming wire lines made of a transparent conductor (indium tin oxide or the like) on the surfaces of the base portion 111 and the protrusions 112, using a lift-off process.

Similarly to the terminal 115A1, a wire line 115B1 is provided on a surface of the first insulating portion 110 in the +z direction. The wire line 115B1 is coupled to an end side of the third electrode 115B on the +y direction side and extends to an end side of the first insulating portion 110 on the +y direction side. The parasitic inductance of the wire line 115B1 is used as a part of the inductance component of a resonance circuit including the second capacitor 120C. Since the parasitic inductance of the wire line 115B1 increases as the length of the wire line 115B1 becomes longer, the wire line 115B1 may be, for example, a meander-shaped wire line. The wire line 115B1 can be manufactured by forming a wire line made of a transparent conductor (indium tin oxide or the like) on the surface of the base portion 111 on the +z direction side, using a lift-off process.

Similarly to the second electrode 125A, the fourth electrode 125B is provided on a surface of the protrusion 122 (see FIG. 5) on the +z direction side, a side surface of the protrusion 122 on the +x direction side, a side surface of the protrusion 122 on the -x direction side, and a side surface of the protrusion 122 on the +y direction side. The fourth electrode 125B is further formed on a side surface of the base portion 121 on the +y direction side (a side surface parallel to the xz plane between one protrusion 122 and another protrusion 122), and a surface of the base portion 121 on the +z direction side. The fourth electrode 125B is held at the ground potential (0 V).

The fourth electrode 125B is formed on outer surfaces of the remaining protrusions 122 excluding the protrusions 122 on which the second electrode 125A is formed, among the plurality of protrusions 122 (see FIG. 5). In FIG. 4, as an example, the fourth electrode 125B is formed on outer surfaces of the three protrusions 122 on the +x direction side among the ten protrusions 122. In addition, the fourth electrode 125B may be further formed on a surface of the protrusion 122 on the -z direction side. As an example, such a fourth electrode 125B can be manufactured by forming wire lines made of a transparent conductor (indium tin oxide or the like) on the surfaces of the base portion 121 and the protrusions 122, using a lift-off process. Note that the first electrode 115A, the second electrode 125A, the third electrode 115B, and the fourth electrode 125B do not have to protrude in a comb-teeth shape and may be, for example, flat electrodes.

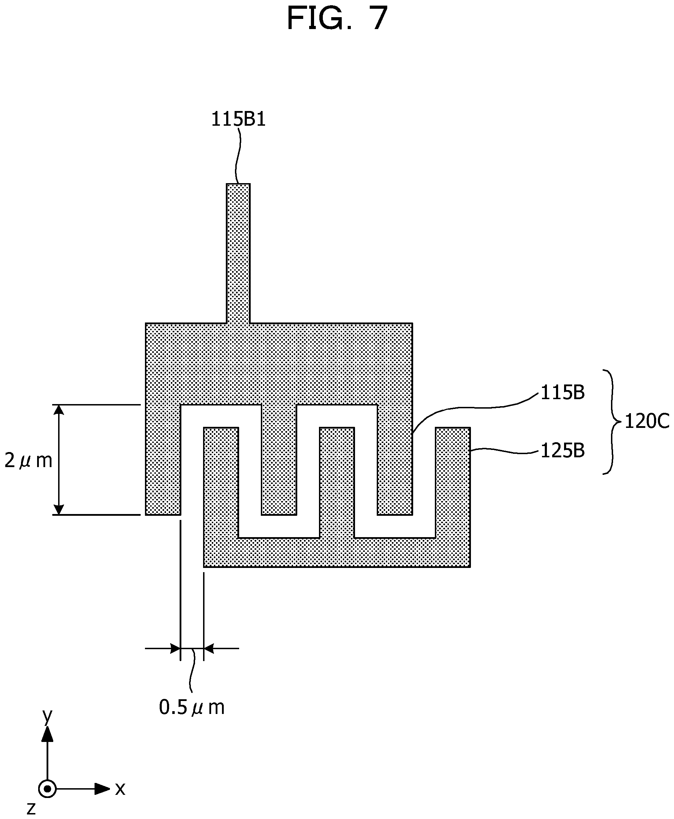

Here, the dimensions relating to the comb teeth included in the third electrode 115B and the fourth electrode 125B will be described with reference to FIG. 7. FIG. 7 is a diagram explaining dimensions relating to the third electrode 115B and the fourth electrode 125B. The third electrode 115B and the fourth electrode 125B constitute the second capacitor 120C. FIG. 7 illustrates the third electrode 115B and the fourth electrode 125B in a state in which the second insulating portion 120 (see FIGs. 4 and 5) has approached most closely to the first insulating portion 110 (see FIGs. 4 and 5).

The length of the comb teeth of the third electrode 115B and the fourth electrode 125B in the y direction is 2 µm as an example. In addition, the interval (gap) in the x direction between the comb teeth of the third electrode 115B and the fourth electrode 125B is 0.5 µm as an example.

As illustrated in FIG. 4, the first capacitor 110C includes the first electrode 115A and the second electrode 125A. The first capacitor 110C is used in the optical directional coupler 100 to detect a voltage (inter-electrode voltage) between the first electrode 115A and the second electrode 125A in position control when the movable waveguide 150 is moved. This will be described later in detail.

In the first capacitor 110C, since the first electrode 115A and the second electrode 125A have a comb-teeth shape and a large surface area, a large capacitance can be obtained as compared with a configuration having two flat electrodes. Note that the first electrode 115A and the second electrode 125A are not limited to comb-teeth shaped electrodes and may be two flat electrodes or may have other shapes.

The second capacitor 120C includes the third electrode 115B and the fourth electrode 125B. The second capacitor 120C is used in the optical directional coupler 100 to detect an inter-electrode distance used when correcting a voltage (inter-electrode voltage) between the first electrode 115A and the second electrode 125A in position control when the movable waveguide 150 is moved. This will be described later in detail.

In the second capacitor 120C, since the third electrode 115B and the fourth electrode 125B have a comb-teeth shape and a large surface area, a large capacitance can be obtained as compared with a configuration having two flat electrodes. Note that the third electrode 115B and the fourth electrode 125B are not limited to comb-teeth shaped electrodes and may be two flat electrodes or may have other shapes, but preferably have the same shape as the first electrode 115A and the second electrode 125A.

The shape of the comb teeth of the third electrode 115B and the fourth electrode 125B of the second capacitor 120C is equal to the shape of the comb teeth of the first electrode 115A and the second electrode 125A of the first capacitor 110C. In addition, the first electrode 115A and the third electrode 115B are formed in the first insulating portion 110, and the second electrode 125A and the fourth electrode 125B are formed in the second insulating portion 120. Therefore, an inter-electrode distance between the first electrode 115A and the second electrode 125A of the first capacitor 110C (the inter-electrode distance of the first capacitor 110C) is equal to an inter-electrode distance between the third electrode 115B and the fourth electrode 125B of the second capacitor 120C (the inter-electrode distance of the second capacitor 120C). The inter-electrode distance of the first capacitor 110C and the inter-electrode distance of the second capacitor 120C are regularly kept equal even if the second insulating portion 120 and the movable waveguide 150 move in the y direction with respect to the first insulating portion 110.

Note that, here, a mode in which the shape of the comb teeth and the inter-electrode distance are equal between the third electrode 115B and the fourth electrode 125B of the second capacitor 120C and the first electrode 115A and the second electrode 125A of the first capacitor 110C will be described, but the mode is not limited to such a mode. The shapes of the first electrode 115A, the second electrode 125A, the third electrode 115B, and the fourth electrode 125B may be any shape as long as the ratio between the inter-electrode distance of the first capacitor 110C and the inter-electrode distance of the second capacitor 120C is regularly kept unchanged even if the second insulating portion 120 and the movable waveguide 150 move in the y direction with respect to the first insulating portion 110.

One spring 130 is provided on each of two sides of the first insulating portion 110 and the second insulating portion 120 in the x direction. Here, the spring 130 on the -X direction side will be referred to as a spring 130A, and the spring 130 on the +X direction side will be referred to as a spring 130B. The metal film 140 is not formed on the spring 130A, but the metal film 140 is formed on the spring 130B. Hereinafter, the springs 130A and 130B will be referred to as springs 130 unless otherwise distinguished.

The springs 130A and 130B have base portions 131 and leaf spring portions 132. The base portion 131 moves together with the movable waveguide 150. The leaf spring portion 132 of the spring 130A extends in the +x direction from two ends of the base portion 131 in the y direction and has distal ends coupled to side surfaces of the first insulating portion 110 and the second insulating portion 120 on the -X direction side. The width of the leaf spring portion 132 in the z direction is equal to the thickness of the first insulating portion 110 and the second insulating portion 120 in the z direction, and the thickness of the leaf spring portion 132 in the y direction is very thin as illustrated in FIGs. 4 and 5. The leaf spring portion 132 of the spring 130B extends in the -x direction from two ends of the base portion 131 in the y direction and has distal ends coupled to side surfaces of the first insulating portion 110 and the second insulating portion 120 on the +X direction side.

As illustrated in FIGs. 4 and 5, the springs 130A and 130B are in a state in which the leaf spring portion 132 stretches straight in the x direction with respect to the base portion 131 and is not deformed and are in a natural state not subjected to an external force. When a voltage is applied to the first electrode 115A, a force of attracting the second electrode 125A (and the second insulating portion 120) in the +y direction toward the first electrode 115A (and the first insulating portion 110) acts. At this time, the leaf spring portion 132 generates an elastic force (restoring force) to return the second electrode 125A (and the second insulating portion 120) in the -y direction, but the Coulomb force attracting the second electrode 125A (and the second insulating portion 120) in the +y direction toward the first electrode 115A (and the first insulating portion 110) is larger than the generated elastic force (restoring force). Accordingly, the first electrode 115A (and the first insulating portion 110) moves in the +y direction.

When the voltage is not applied to the first electrode 115A, the leaf spring portion 132 returns to a state stretching straight in the x direction with respect to the base portion 131 by the elastic force (restoring force) of the leaf spring portion 132, and the second electrode 125A (and the second insulating portion 120) returns to the position illustrated in FIG. 4.

The metal film 140 includes a wire line portion 141 and the terminal 142. The wire line portion 141 is formed on a surface of the base portion 131 of the spring 130B and a surface of the leaf spring portion 132 of the spring 130B. The terminal 142 is formed at an end portion on the +x direction side of a surface on the +z direction side of the first insulating portion 110. One end of the wire line portion 141 is coupled to the terminal 142, and another end of the wire line portion 141 is coupled to the fourth electrode 125B.

The parasitic inductance of the metal film 140 is used as a part of the inductance component of a resonance circuit including the second capacitor 120C. This will be described later in detail. Since the film thickness of the metal film 140 is very thin and the widths of the wire line portion 141 in the y direction and the z direction are very narrow, the resistance value of the wire line portion 141 is relatively large. Therefore, the metal film 140 may be made of the same metal as the metal film of the fourth electrode 125B or may be formed of a superconducting film.

The movable waveguide 150 is coupled to a -y direction side of the second insulating portion 120. Here, as an example, the movable waveguide 150 has a shape curved in line with a step between surfaces of the waveguides 10A and 10B on the +y direction side.

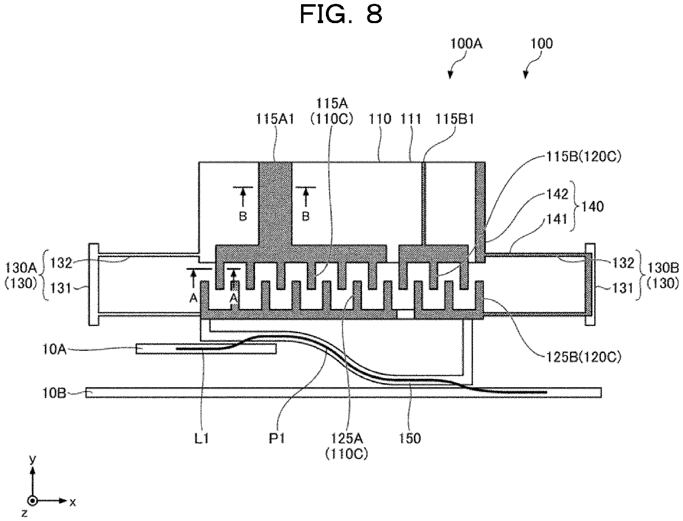

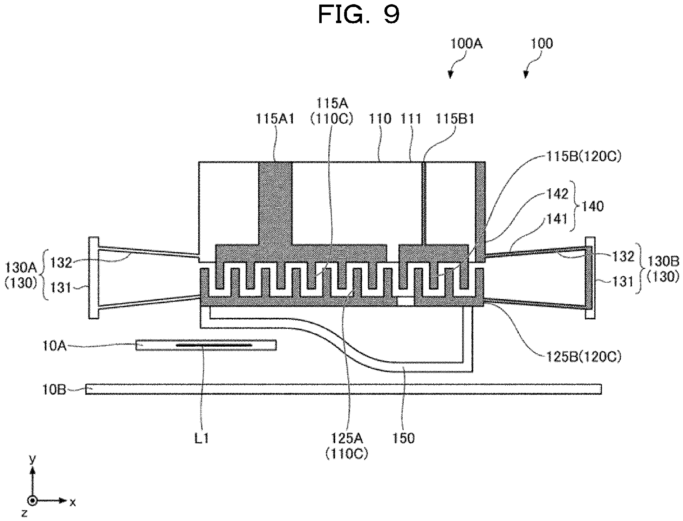

Here, an operation of the movable waveguide 150 will be described with reference to FIGs. 8 and 9. FIG. 8 is a diagram illustrating a state in which the optical directional coupler 100 is turned on, and FIG. 9 is a diagram illustrating a state in which the optical directional coupler 100 is turned off.

The state in which the optical directional coupler 100 is turned on is a state in which no voltage is applied to the first electrode 115A and the leaf spring portion 132 is not deformed, as illustrated in FIG. 8, and is a state in which the movable waveguide 150 is in contact with the surfaces of the waveguides 10A and 10B on the +y direction side. Since the optical directional coupler 100 is in the turned-on state in a state in which no voltage is applied to the first electrode 115A, the optical directional coupler 100 illustrated in FIGs. 8 and 9 is a normally-on optical directional coupler 100 as an example.

The state in which the optical directional coupler 100 is turned on is a coupled state in which the movable waveguide 150 couples the waveguides 10A and 10B. In the coupled state, light L1 propagating through the waveguide 10A propagates to the waveguide 10B by way of the movable waveguide 150. Therefore, an optical path P1 that allows the light L1 to propagate is produced in the waveguide 10A, the movable waveguide 150, and the waveguide 10B.

The state in which the optical directional coupler 100 is turned off is a state in which a voltage is applied to the first electrode 115A and the leaf spring portion 132 is deformed, as illustrated in FIG. 9, and is a state in which the movable waveguide 150 is not in contact with the surfaces of the waveguides 10A and 10B on the +y direction side. In a state in which the optical directional coupler 100 is turned off, a voltage is applied to the first electrode 115A, and the second electrode 125A (and the second insulating portion 120) is attracted in the +y direction toward the first electrode 115A (and the first insulating portion 110). The state in which the optical directional coupler 100 is turned off is a decoupled state in which the movable waveguide 150 does not couple the waveguides 10A and 10B. In the decoupled state, the optical path P1 illustrated in FIG. 8 is not produced, and the light L1 propagating through the waveguide 10A does not propagate to the waveguide 10B.

### <Resonance Circuit>

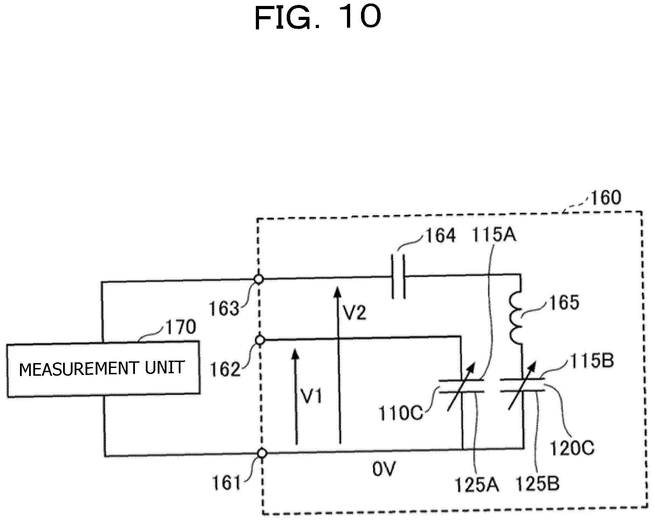

FIG. 10 is a diagram illustrating an example of an equivalent circuit 160 of the optical directional coupler 100. FIG. 10 illustrates a measurement unit 170 along with the equivalent circuit 160. The equivalent circuit 160 includes the first capacitor 110C, the second capacitor 120C, terminals 161, 162, and 163, an adjustment capacitor 164, and an inductor unit 165. Capacitances of the first capacitor 110C and the second capacitor 120C change depending on a change in the inter-electrode distance and thus are indicated by symbols of variable capacitors.

The terminal 161 is coupled to the second electrode 125A and the fourth electrode 125B. Therefore, the potential of the terminal 161 is 0 V. The terminal 162 is coupled to the first electrode 115A. The terminal 163 is coupled to the second electrode 125A via the adjustment capacitor 164 and the inductor unit 165. The voltage of the terminal 162 with respect to the voltage of the terminal 161 is denoted by V1. The voltage of the terminal 163 with respect to the voltage of the terminal 161 is denoted by V2.

The adjustment capacitor 164 has capacitance for adjusting a resonance frequency of a resonance circuit to be described later. The adjustment capacitor 164 only has to be provided if applicable and does not have to be provided when not applicable. The adjustment capacitor 164 may be, for example, a chip capacitor or a capacitor obtained by patterning a metal film.

The inductor unit 165 as an electronic component indicates the total parasitic inductance of the wire line 115B1 and the metal film 140. The inductance of the inductor unit 165 is equal to the total parasitic inductance of the wire line 115B1 and the metal film 140.

The resonance circuit of the optical directional coupler 100 includes the second capacitor 120C, the adjustment capacitor 164, and the inductor unit 165. Assuming that the total capacitance of the second capacitor 120C and the adjustment capacitor 164 is C and the inductance of the inductor unit 165 is L, the resonance frequency f of the resonance circuit is expressed as f = 1/12π × (LC)^{1/2}}.

The measurement unit 170 is coupled to the terminals 161 and 163. The measurement unit 170 sweeps the frequency to detect the resonance frequency and measures an inter-electrode distance D2 of the second capacitor 120C. As the measurement unit 170, a network analyzer can be used.

Note that, when the optical directional coupler 100 is in the turned-off state, the resonance frequency of the resonance circuit including second capacitor 120C is 1.00 GHz as an example, and when the optical directional coupler 100 is in the turned-on state, the resonance frequency of the resonance circuit including second capacitor 120C is 1.0065 GHz as an example. Since the resonance frequency changes in this manner, the inter-electrode distance D2 of the second capacitor 120C can be measured.

### <Drive Control Unit 180>

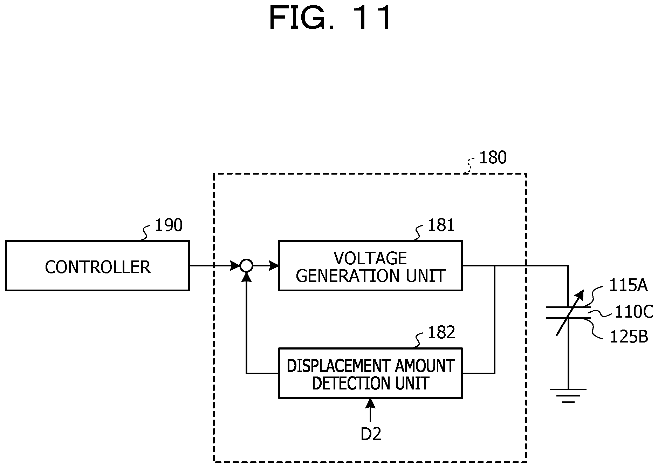

FIG. 11 is a diagram illustrating an example of a drive control unit 180. FIG. 11 illustrates the first capacitor 110C and a controller 190 along with the drive control unit 180. The drive control unit 180 includes a voltage generation unit 181 and a displacement amount detection unit 182.

An input terminal of the voltage generation unit 181 is coupled to the controller 190 and an output terminal of the displacement amount detection unit 182, and an output terminal of the voltage generation unit 181 is coupled to the first electrode 115A of the first capacitor 110C and an input terminal of the displacement amount detection unit 182. That is, the output terminal of the voltage generation unit 181 is coupled to the terminal 162 in the equalization circuit in FIG. 10.

The voltage generation unit 181 generates and outputs a voltage to be applied to the first electrode 115A, based on an instruction input from the controller 190 and a control amount FB input from the displacement amount detection unit 182.

The displacement amount detection unit 182 generates and outputs the control amount FB, based on the inter-electrode distance D2 and the output of the voltage generation unit 181.

The controller 190 works out a target value according to the optical directional coupler 100 turned on or off. Therefore, feedback control can be taken based on the target value according to the optical directional coupler 100 turned on or off.

As described above, the control amount FB generated using the inter-electrode distance D2 of the second capacitor 120C is input to the voltage generation unit 181, and the voltage generation unit 181 generates a voltage corrected based on the control amount FB and applies the generated voltage to the first electrode 115A.

Accordingly, the electronic component 100A, the optical directional coupler 100, and the method for controlling the optical directional coupler 100 that are capable of accurately moving the movable waveguide 150 may be provided.

In addition, the inductor unit included in the resonance circuit represents the parasitic inductance of the wire line 115B1 coupled to the third electrode 115B and the metal film 140 formed on the spring 130 coupled to the second insulating portion 120. Therefore, the resonance circuit can be implemented using the wire line 115B1 and the metal film 140, and high integration may be achieved. Note that the inductor unit may be formed by either the wire line 115B1 or the metal film 140.

In addition, in a case where the metal film 140 is formed of a superconducting film, the resistance of the wire line portion 141 of the metal film 140 may be greatly reduced, the quality factor (Q) value of the resonance circuit is raised, and the resonance frequency may be easily measured.

In addition, the first insulating portion 110 includes the protrusions 112 that constitute the first comb-teeth portion, and the first electrode 115A and the third electrode 115B are provided on the first comb-teeth portion. In addition, the second insulating portion 120 includes the protrusions 122 that constitute the second comb-teeth portion that faces the first comb-teeth portion in a nested manner, and the second electrode 125A and the fourth electrode 125B are provided on the second comb-teeth portion. Therefore, the capacitance of the first capacitor 110C including the first electrode 115A and the third electrode 115B, and the capacitance of the second capacitor 120C including the second electrode 125A and the fourth electrode 125B may have a large capacity.

Note that the normally-on optical directional coupler 100 has been described above as an example. However, the optical directional coupler 100 may be a normally-off optical directional coupler 100 that is brought into a turned-off state in a state in which no voltage is applied to the first electrode 115A.

Although a mode in which the electronic component 100A is used for the optical directional coupler 100 has been described above, the electronic component 100A can detect the position of the second insulating portion 120 with high accuracy and thus may be used for a device other than the optical directional coupler 100.

### <First Modification>

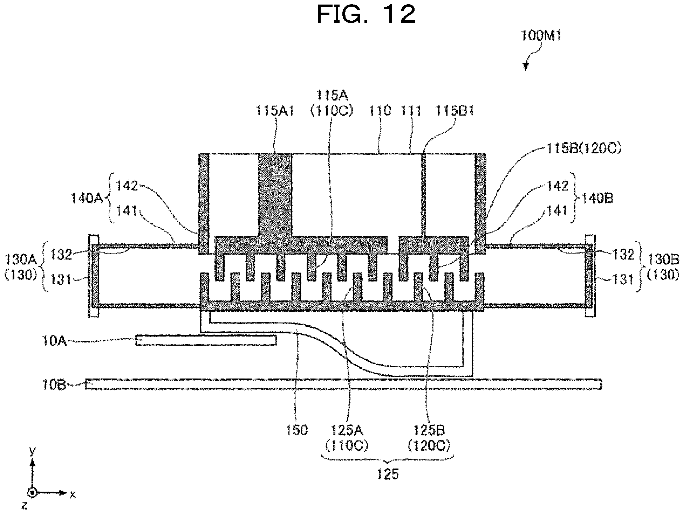

FIG. 12 is a plan view illustrating an example of a configuration of an optical directional coupler 100M1 of a first modification of the embodiment. Here, differences from the optical directional coupler 100 illustrated in FIG. 4 will be described. Here, the same reference signs are used for constituent elements similar to the constituent elements of the optical directional coupler 100 illustrated in FIG. 4, and the description thereof will be omitted.

In the optical directional coupler 100M1, the second electrode 125A and the fourth electrode 125B of the optical directional coupler 100 illustrated in FIG. 4 are integrated as an electrode 125, and additionally, a metal film 140A is added.

The metal film 140A includes the wire line portion 141 and the terminal 142 and is formed on the spring 130A. A metal film 140B is similar to the metal film 140 illustrated in FIG. 4. Similar to the metal film 140B, the parasitic inductance of the metal film 140A is used as a part of the inductance component of the resonance circuit including the second capacitor 120C.

The electrode 125 in FIG. 12 includes the second electrode 125A and the fourth electrode 125B. The second electrode 125A of the electrode 125 in FIG. 12 is a portion of the electrode 125 that constitutes the first electrode 115A and the first capacitor 110C. The fourth electrode 125B of the electrode 125 in FIG. 12 is a portion of the electrode 125 that constitutes the third electrode 115B and the second capacitor 120C.

The second electrode 125A and the fourth electrode 125B of the optical directional coupler 100 illustrated in FIG. 4 are both held at 0 V and thus function similarly even when integrated as the electrode 125. Therefore, the optical directional coupler 100M1 of the first modification may accurately move the movable waveguide 150 similarly to the optical directional coupler 100. Note that the optical directional coupler 100M1 may have a configuration not including the metal film 140A.

### <Second Modification>

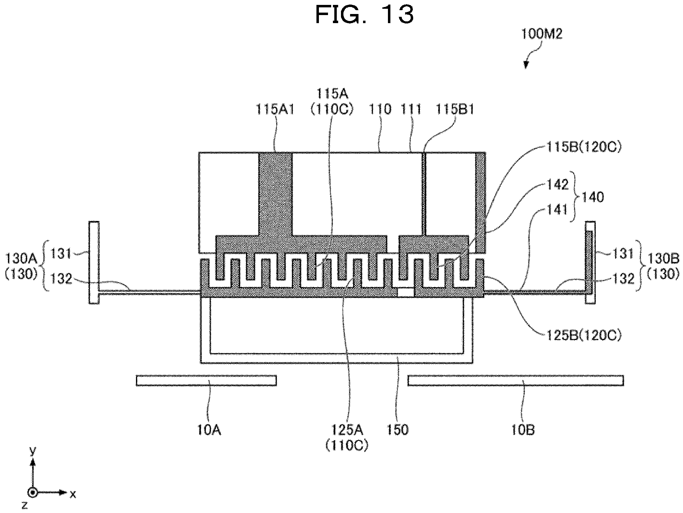

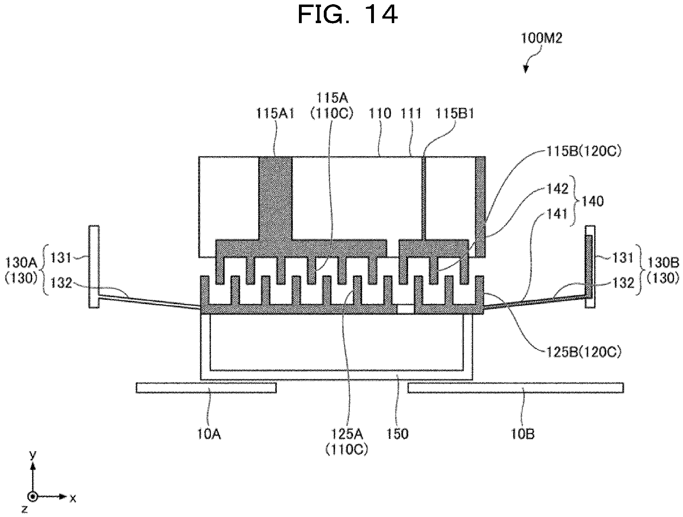

FIGs. 13 and 14 are plan views illustrating an example of a configuration of an optical directional coupler 100M2 of a second modification of the embodiment. The optical directional coupler 100M2 is a normally-off optical directional coupler. FIG. 13 illustrates the optical directional coupler 100M2 in the turned-off state, and FIG. 14 illustrates the optical directional coupler 100M2 in the turned-on state. Here, differences from the optical directional coupler 100 illustrated in FIG. 4 will be described. Here, the same reference signs are used for constituent elements similar to the constituent elements of the optical directional coupler 100 illustrated in FIG. 4, and the description thereof will be omitted.

The optical directional coupler 100M2 is different from the optical directional coupler 100 illustrated in FIG. 4 in that the optical directional coupler 100M2 has a configuration in which the leaf spring portions 132 of the springs 130A and 130B are coupled only to the second insulating portion 120, that the optical directional coupler 100M2 is a normally-off type, and that an end portion of the movable waveguide 150 on the -y direction side linearly extends in the x direction. The end portion of the movable waveguide 150 on the -y direction side linearly extends in the x direction because the positions of the waveguides 10A and 10B in the y direction are equal to each other. Since the first insulating portion 110 is fixed, the optical directional coupler 100M2 is turned off (decoupled state) as illustrated in FIG. 13 in a state in which no voltage is applied to the first electrode 115A. In addition, when a voltage (negative voltage) is applied to the first electrode 115A, the movable waveguide 150 moves in the -y direction and comes into contact with the waveguides 10A and 10B as illustrated in FIG. 14, whereby the optical directional coupler 100M2 is turned on (coupled state). Since the voltage is applied to the first electrode 115A such that the second electrode 125A moves in a direction away from the first electrode 115A, the polarity of the applied voltage is opposite to that of the normally-on type.

When the optical directional coupler 100M2 is turned on, as illustrated in FIG. 14, the springs 130A and 130B are in a deformed state to generate an elastic force (restoring force) to return the movable waveguide 150 in the +y direction. In this manner, in the normally-off type and the normally-on type, the presence or absence of application of a voltage to the first electrode 115A and the polarity thereof are different, but the basic principle is similar. In addition, even in the configuration in which the leaf spring portions 132 of the springs 130A and 130B are coupled only to the second insulating portion 120, the operation of the movable waveguide 150 to move in the y direction is similar to that of the optical directional coupler 100 illustrated in FIG. 4.

Accordingly, the electronic component, the optical directional coupler 100M2, and the method for controlling the optical directional coupler 100M2 that are capable of accurately moving the movable waveguide 150 may be provided. Note that the electronic component of the second modification has a configuration obtained by omitting the movable waveguide 150 from the optical directional coupler 100M2.

### <Third Modification>

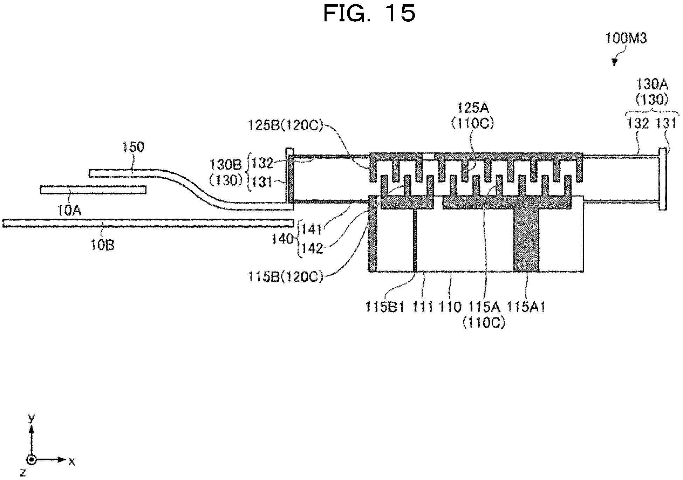

FIG. 15 is a plan view illustrating an example of a configuration of an optical directional coupler 100M3 of a third modification of the embodiment. The optical directional coupler 100M3 is a normally-off optical directional coupler. The optical directional coupler 100M3 has a configuration in which the positions in the y direction of the first insulating portion 110, the first electrode 115A, and the third electrode 115B and the positions of the second insulating portion 120, the second electrode 125A, and the fourth electrode 125B in the optical directional coupler 100M2 of the second modification illustrated in FIG. 13 are exchanged, and additionally, the positional relationship between the first electrode 115A, the second electrode 125A, and the spring 130A and the third electrode 115B, the fourth electrode 125B, and the spring 130B is reversed in the x direction. In addition, in the optical directional coupler 100M3, the movable waveguide 150 is attached to the base portion 131 of the spring 130B at a position away from the second insulating portion 120.

In a state in which no voltage is applied to the first electrode 115A, the optical directional coupler 100M3 is turned off (decoupled state) as illustrated in FIG. 15. In addition, when a voltage (negative voltage) is applied to the first electrode 115A, the movable waveguide 150 moves in the -y direction and comes into contact with the waveguides 10A and 10B, whereby the optical directional coupler 100M3 is turned on (coupled state).

Accordingly, the electronic component, the optical directional coupler 100M3, and the method for controlling the optical directional coupler 100M3 that are capable of accurately moving the movable waveguide 150 may be provided. Note that the electronic component of the third modification has a configuration obtained by omitting the movable waveguide 150 from the optical directional coupler 100M3.

The electronic component, the optical directional coupler, and the method for controlling the optical directional coupler according to the exemplary embodiments of the present disclosure have been described above. However, the present disclosure is not limited to the specifically disclosed embodiments, and various modifications and alterations can be made without departing from the scope of the claims.

### CITATION LIST

### PATENT DOCUMENT

Patent Document 1: U.S. Patent Application Publication No. 2003/0108274

### REFERENCE SIGNS LIST

1 Quantum computer
10, 10X, 10Y, 10S Waveguide
20 Qubit device
30 Beam splitter
40 Coupler
50 Photodetector
100, 100M1, 100M2, 100M3 Optical directional coupler
110 First insulating portion
120 Second insulating portion
115A First electrode
125A Second electrode
115B Third electrode
125B Fourth electrode
125 Electrode
110C First capacitor
120C Second capacitor
130 Spring
140, 140A, 140B Metal film
150 Movable waveguide

## Claims

1. An electronic component comprising:
a first insulating portion;
a second insulating portion that faces the first insulating portion and is movable relative to the first insulating portion such that a distance from the first insulating portion changes;
a first capacitor that includes a first electrode provided in the first insulating portion and a second electrode provided in the second insulating portion;
a second capacitor that includes a third electrode provided in the first insulating portion and a fourth electrode provided in the second insulating portion;
an inductor coupled to the second capacitor to constitute a resonance circuit.

2. The electronic component according to claim 1, wherein the inductor is a wire line coupled to the third electrode or a metal portion formed on a spring coupled to the second insulating portion.

3. The electronic component according to claim 1 or 2, wherein the inductor is formed of a superconductor.

4. The electronic component according to any one of claims 1 to 3, wherein the first electrode and the third electrode have a comb-teeth shape, and
the second electrode and the fourth electrode have the comb-teeth shape that faces the first electrode and the third electrode in a nested manner, respectively.

5. The electronic component according to any one of claims 1 to 4, wherein the second electrode and the fourth electrode are coupled to each other.

6. An optical directional coupler comprising:
a first insulating portion;
a second insulating portion that faces the first insulating portion and is movable relative to the first insulating portion such that a distance from the first insulating portion changes;
a first capacitor that includes a first electrode provided in the first insulating portion and a second electrode provided in the second insulating portion;
a second capacitor that includes a third electrode provided in the first insulating portion and a fourth electrode provided in the second insulating portion;
an inductor coupled to the second capacitor to constitute a resonance circuit; and
a movable waveguide that is provided in the second insulating portion and switched between a coupled state that optically couples between a first waveguide and a second waveguide or between the first waveguide or the second waveguide and a qubit device and a decoupled state that does not optically couple between the first waveguide and the second waveguide, with movement of the second insulating portion.

7. The optical directional coupler according to claim 6, wherein the inductor is a wire line coupled to the third electrode or a metal portion formed on a spring coupled to the second insulating portion.

8. The optical directional coupler according to claim 6 or 7, wherein the inductor is formed of a superconductor.

9. The optical directional coupler according to any one of claims 6 to 8, wherein the first electrode and the third electrode have a comb-teeth shape, and
the second electrode and the fourth electrode have the comb-teeth shape that faces the first electrode and the third electrode in a nested manner, respectively.

10. The optical directional coupler according to any one of claims 6 to 9, further comprising a feedback control unit that calculates an inter-electrode distance of the second capacitor from a resonance frequency of the resonance circuit obtained by sweeping a frequency of a signal applied to the resonance circuit, and takes feedback control of a voltage to be applied to the first capacitor by using the calculated inter-electrode distance.

11. The optical directional coupler according to any one of claims 6 to 10, wherein the second electrode and the fourth electrode are coupled to each other.

12. A method for controlling an optical directional coupler that includes:
a first insulating portion;
a second insulating portion that faces the first insulating portion and is movable relative to the first insulating portion such that a distance from the first insulating portion changes;
a first capacitor that includes a first electrode provided in the first insulating portion and a second electrode provided in the second insulating portion;
a second capacitor that includes a third electrode provided in the first insulating portion and a fourth electrode provided in the second insulating portion;
an inductor coupled to the second capacitor to constitute a resonance circuit; and
a movable waveguide that is provided in the second insulating portion and switched between a coupled state that optically couples between a first waveguide and a second waveguide or between the first waveguide or the second waveguide and a qubit device and a decoupled state that does not optically couple between the first waveguide and the second waveguide, with movement of the second insulating portion, wherein
the method comprises: calculating an inter-electrode distance of the second capacitor from a resonance frequency of the resonance circuit obtained by sweeping a frequency of a signal applied to the resonance circuit, and taking feedback control of a voltage to be applied to the first capacitor by using the calculated inter-electrode distance.
